# EUROPEAN PATENT SPECIFICATION

(11) **EP 0 710 601 B1**
(45) Date of publication and mention of the grant of the patent: **23.12.1998**
(21) Application number: 95117082.8
(22) Date of filing: 30.10.1995
(51) Int. Cl.: B62D 13/04

(54) **Power steering system for the steerable wheels of a rear axle of a vehicle**
Servolenkung für die lenkbaren Räder der Hinterachse eines Fahrzeugs
Direction assistée pour les roues directrices de l'essieu arrière d'un véhicule

(30) Priority: 02.11.1994 IT BO940479
(43) Date of publication of application: 08.05.1996
(73) Proprietor: R.C.D. S.r.l., 40069 Zola Predosa (Bologna) (IT)
(72) Inventor: Biondi, Armando, I-40010 Sala Bolognese (BO) (IT)
(74) Representative: Modiano, Guido, Dr.-Ing.

(56) References cited:
- WO-A-81/02554
- WO-A-89/07065
- DE-A- 2 407 605
- DE-A- 3 402 442
- FR-A- 1 363 252
- US-A- 3 354 982
- US-A- 3 880 439
- US-A- 5 280 939
- SOVIET INVENTIONS ILLUSTRATED, Section PQ, Week K46, 28 December 1983 Derwent Publications Ltd, London, GB Class Q22, AN 83-819002/46

## Description

The present invention relates to a steering system for the steerable wheels of a rear axle of a vehicle such as a semitrailer or a trailer.

It is known that vehicles composed of a semitrailer or trailer connected to a pulling vehicle are currently commercially available.

In the first case, the semitrailer rests, with the front part of its loading platform, on a power chassis (which is termed "towing unit" hereinafter to distinguish it from the power chassis of a truck) that has a surface (fifth wheel) for the articulation and coupling of a kingpin that protrudes downward from the loading platform. The rear part of the semitrailer rests on the ground by virtue of two or more rear axles, one of which has steerable wheels.

In the second case, the trailer is connected, by means of a bar or a drawbar, to a power chassis (truck, tractor, or the like) and comprises a front axle, which has steerable wheels, and one or more rear axles. Often, one of the rear axles is also provided with steerable wheels to improve maneuverability of the vehicle and reduce tire wear.

DE-A-3402442 discloses a system according to the preamble of claim 1 for steering the wheels of a rear axle of a semi-trailer, which includes a pair of hydraulic cylinders acting at opposite ends of the rear wheel steering system for positioning the rear wheels, and a central pneumatic cylinder for releasably locking the steering system.

SU-A-988628 discloses a system for steering the wheels of a semi-trailer axle, which includes a pair of pneumatic cylinders acting at opposite ends of the wheel steering system for centering the wheels, and a central pneumatic cylinder for releasably locking the steering system.

In both systems of DE-A-3402442 and SU-A-988628, the pair of cylinders acting at the opposite ends of the steering system position the wheels in the appropriate centered position, whereupon the central cylinder may be actuated to lock the wheels in the centered position.

The aim of the present invention is to provide a system for steering and locking the rear steerable axle of a semitrailer or trailer.

Within the scope of this aim, an object of the present invention is to provide a system that is structurally simple and highly reliable in operation.

This aim and this object are achieved by a system for steering the steerable wheels of a rear axle of a semitrailer or trailer, the features whereof are defined in the appended claims.

Further particularities of the invention will become apparent from the following description on the basis of the accompanying drawings, wherein:
figure 1 is a plan view of a rear axle of a semitrailer or trailer provided with steerable wheels;
figure 2 is a front view of the axle of figure 1;
figure 3 is a sectional view, taken along the plane III-III of figure 1;
figure 4 is a schematic view of a system according to the invention, applicable to a semitrailer with an axle according to figures 1 to 3;
figure 5 is a sectional view, taken along the plane V-V of figure 4;
figure 6 is a sectional view, taken along the plane VI-VI of figure 5;
figure 7 is an electrical diagram for the control of the system of figure 4;
figure 8 is a partial enlarged-scale view of the system of figure 4;
figure 9 is a schematic view of a second embodiment of the invention as applied to a vehicle composed of a towing unit and a semitrailer;
figure 10 is a schematic view of a third embodiment of the invention as applied to a vehicle composed of a power chassis and a trailer;
figure 11 is a schematic view, similar to figure 10, showing further details of the steering system;
figure 12 is a view of a fourth embodiment of the invention as applied to a vehicle having a plurality of rear axles with steerable wheels; and
figure 13 is a schematic view, similar to that of figure 12, but with a modified hydraulic system.

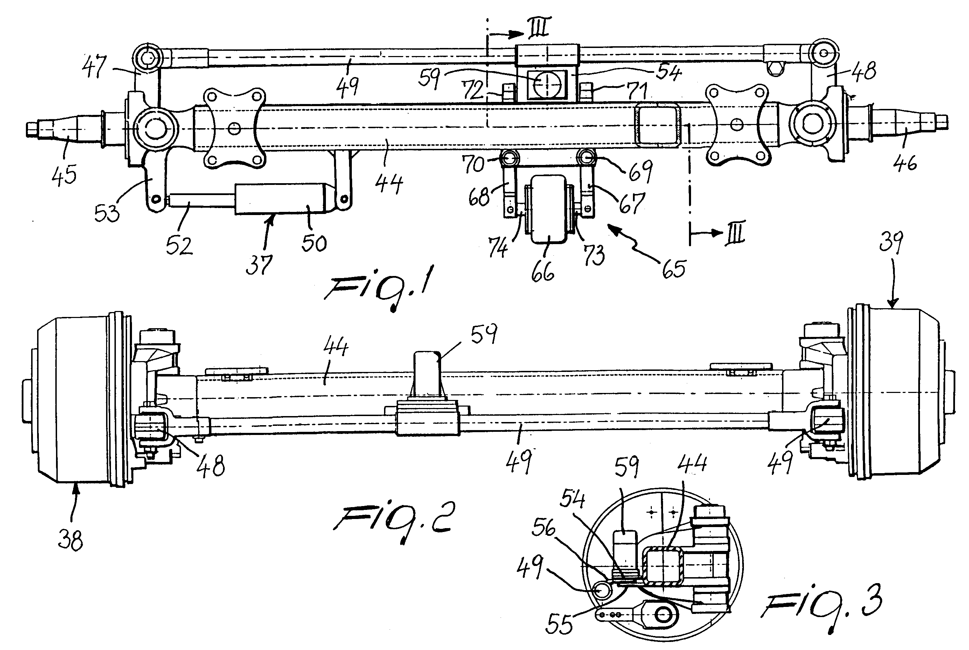

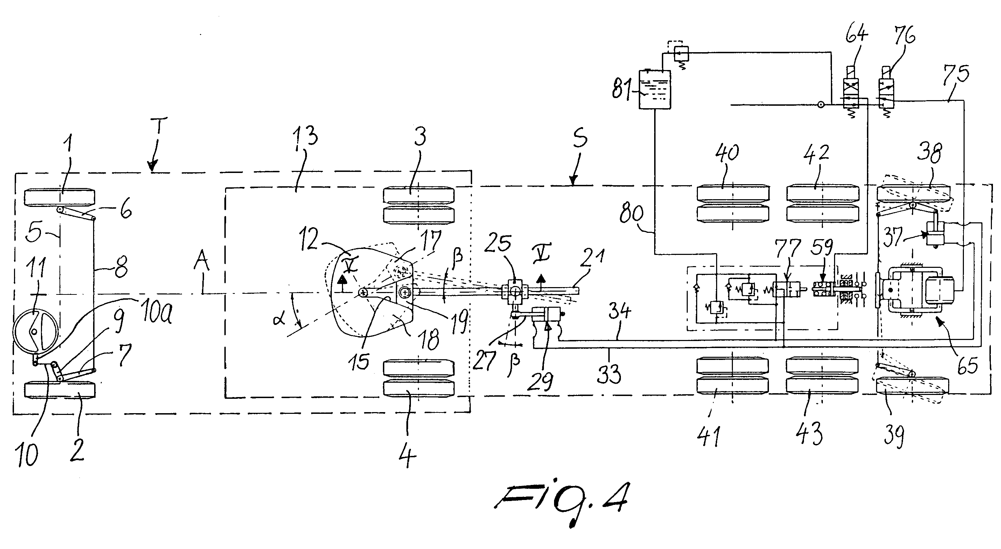

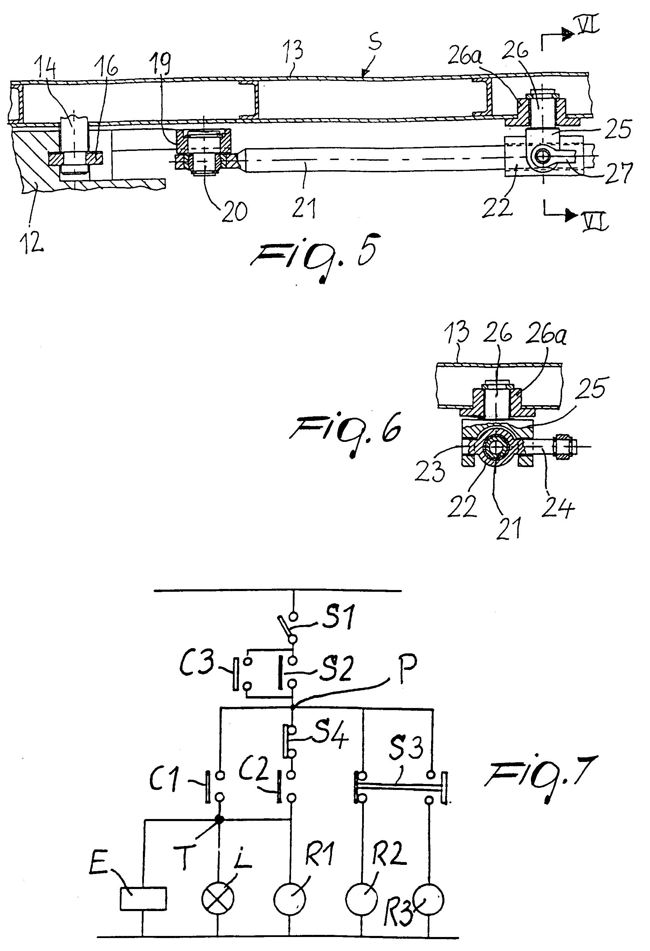

With reference to the above figures 1 to 8, the reference numerals 1 and 2 designate the two steerable wheels of a towing unit T of a motor vehicle known as a rig, that is to say, a vehicle that comprises a semitrailer S that is articulately connected to the towing unit; the rear axle wheels of the towing unit are designated by the reference numerals 3 and 4. The wheels 1 and 2 are mounted, in a steering manner, on an axle 5 and can steer by means of a parallelogram that is composed of two arms 6 and 7 that are articulately linked to each other by a transverse bar 8. A second arm 9 is rigidly coupled to the arm 7, is connected to the actuation lever 10a of a conventional hydraulic power steering unit by means of a traction element 10, and is capable of producing, when the steering wheel 11 is operated, the oscillation of the lever 10a and, through the arms 6 and 7 and the bar 8, the steering of the wheels 1 and 2 in one direction or the other.

The towing unit T is provided with a fifth wheel 12 that is supported so that it can oscillate to allow the resting and coupling of the front end of the loading platform 13 of the semitrailer S.

The oscillating motion of the fifth wheel 12, however, is preset so that said fifth wheel cannot rotate with respect to the towing unit.

The coupling between the towing unit T and the semitrailer S is provided by means of a kingpin 14 that protrudes downward from the platform 13 and engages in a seat 15 of the fifth wheel 12, to which it is fixed by keys 16.

The seat 15 flares out in a V-like shape towards the rear of the towing unit, so as to form two tails 17 and 18, between which a connecting cross-member 19 is arranged. A cylindrical rod (hereinafter termed beam 21) is articulated to the center of the cross-member 19 by means of a pivot 20; a sleeve 22 is guided on said beam and has two cylindrical tangs 23 and 24 that are aligned diametrically with respect to the pivot 20 and lie at right angles to the axis of the beam. The tines of a fork 25 are articulately connected to the tangs 23 and 24; said fork is provided, in an upward region, with a vertical pivot 26 by virtue of which it is rotatably supported in a bush 26a of the platform 13.

The tang 24 runs through the respective tine so as to form an arm for connection to the stem 27 of a piston 28 of a double-action hydraulic jack 29, whose cylinder 30 is articulately fixed below the platform 13. The piston 28 divides the internal space of the cylinder 30 into two chambers 31 and 32, from which there extend two ducts 33 and 34 for connection to the respective chambers 35 and 36 of a second double-action hydraulic jack 37 for the orientation of the two rear steerable wheels 38 and 39, with which the semitrailer rests on the ground together with other pairs of non-steerable wheels 40, 41 and 42, 43.

The steering of the rear wheels 38 and 39 is actuated when the longitudinal axis of the towing unit T, as a consequence of the turning of the steering wheels 1 and 2, no longer coincides with the axis of the semitrailer S. The steering angle of the rear wheels is therefore a function of the angle that forms between the longitudinal axis of the towing unit T and the longitudinal axis of the semitrailer S, of the volumetric proportioning of the jacks 29 and 37, and of the corresponding lever arms.

In the illustrated example, the wheels 38 and 39 are arranged behind the pairs of non-steerable wheels 40-43 and are mounted in a steerable manner on an axle that is constituted (see figures 1 to 3) by a tubular beam 44, at the opposite ends of which the pivots 45 and 46, which rotatably support the wheels 38 and 39, are articulated about vertical axes.

Two respective arms 47 and 48 are rigidly coupled to the supporting pivots 45, 46 of the wheels 38, 39 and are mutually connected by a bar 49 that forms, with said arms, the steering parallelogram of the wheels 38, 39. The cylinder 50 of the jack 37 is attached to the beam 44, and its piston 51 mutually separates the chambers 35, 36; by means of the stem 52, said piston is connected to a lever 53 that is rigidly coupled to the arm 47.

Two rectangular plates 54, 55 are fixed to the beam 44 and protrude horizontally towards the bar 49; a gap remains between said plates, and a third plate 56 lies within said gap and is rigidly coupled to the bar 49.

The plate 56 has the same dimensions as the plates 54 and 55 and remains slidingly engaged between them when the steering parallelogram is shifted to the right or to the left.

Respective holes 57 (see figure 8) are formed in the plates 54, 55, and 56 (hereinafter designated as 54-56 for the sake of brevity); said holes 57 have equal diameters and are such as to mutually align when the wheels 38, 39 are co-planar with respect to the wheels 40-43, i.e., during straight-line travel of the vehicle.

In this position, the holes 57 of the plates 54-56 can be engaged by a stem 58 (see figure 8 in particular) that constitutes the bolt of a locking device that comprises a pneumatic jack, generally designated by the reference numeral 59. It is noted that in figure 8, the plates 54-56 are shown in plan view and in cross-section and are crossed by the stem 58, which engages their holes 57. The stem 58 is guided axially through the cylinder 60 of the jack 59; a piston 61 is rigidly coupled thereto and divides the cylinder into two chambers.

One of said chambers accommodates a spring 62 that acts on the piston 61 so as to actuate the stem 58 towards the plates 54-56. The opposite chamber of the cylinder is connected, by means of a duct 63 and an electric valve 64, to the compressed-air system of the vehicle.

The alignment of the plates 54-56, which is required to allow the engagement of the stem 58, is provided by means of a centering device 65 (see figure 1 in particular) that is composed of an expansion jack 66 and of two levers 67, 68 that are pivoted in a rocker-like manner about pivots 69, 70 that are mounted on the beam 44. The levers have two jaw-shaped ends 71, 72, between which the plates 54-56 are interposed, and have two opposite ends that are articulately coupled to the stems 73, 74 of the jack 66.

The expansion jack 66 can be connected to the compressed-air system of the motor vehicle through a duct 75 and the electric valve 76 that is associated with the electric valve 64. In this manner, by activating the jack 66, the jaws 71, 72 close onto the plates 54-56, "levelling" them laterally in the position for aligning the holes for the insertion of the stem 58.

The movement of the stem 58 is combined with the movement of a two-position distributor 77 that has two inlets, which are connected by ducts 78, 79 to the ducts 33, 34 that connect the chambers 31, 32 and 35, 36, and an outlet, which is connected to the discharge reservoir 81 by means of a duct 80. In one of these positions, which corresponds to the one in which the stem 58 is disengaged from the holes 57 of the plates 54-56, the distributor 77 closes the ducts 78, 79, and 80, whereas in the other position it provides the connection between the ducts 33, 34 and the duct 80 and therefore the reservoir 81.

The reference numerals 82 and 83 designate two pressure limiting valves, whose inlets are connected to the ducts 78 and 79 and whose outlets merge into the duct 80.

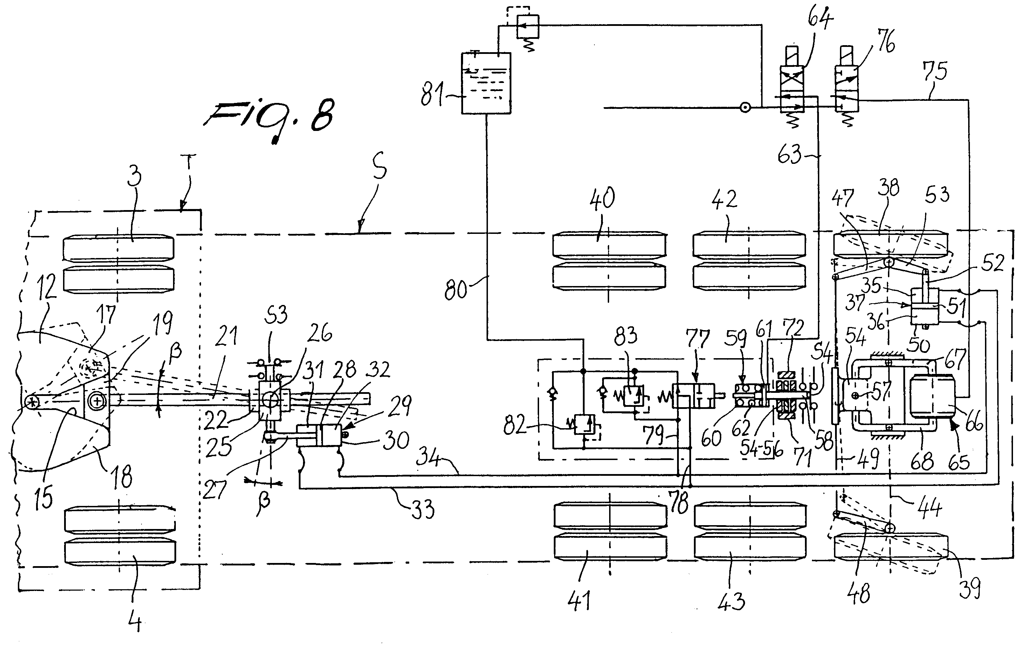

Figure 7 illustrates the electrical diagram of the electromechanical elements that are provided to control the system. In this diagram, the reference signs R1, R2, and R3 designate three relays that are parallel-connected to each other, to a warning light L, and to the solenoid E that controls the electric valve 64. The three relays, the warning light, and the solenoid can be connected to the supply voltage by means of a series of contacts and selectors.

More particularly, S1 designates a selector, which is controlled by the driver of the motor vehicle, for the activation and deactivation of the steering system for the rear steerable wheels 38, 39. A selector S2 is arranged in series to the selector S1 and is controlled by the speedometer of the motor vehicle, allowing the rear wheels 38, 39 to steer up to a preset speed limit, which current statutory provisions set at 50 km/h. The contact C3 of the relay R3 is parallel-connected to the selector S2, and the selector S3 is series-connected thereto; by detecting the position of the stem 58, said selector S3 checks the centering conditions of the rear steering wheels and checks the locking thereof in the straight travel position. The contact C2 of the relay R2 is arranged in series to the selector S3.

The relays R2, R3 can be connected alternatively to the point P between the selectors S2, S3 by means of a selector S3 for the position of the beam 21 and therefore for detecting the straight-line travel of the vehicle. In particular, in the straight-line travel condition, the selector S3 engages the relay R2, whereas in the off-centered condition the selector S3 disengages the relay R2 and presets the activation of the relays R3. The contact C1 of the relay R1 is arranged between the point P and the point T for the connection of the solenoid E, of the lamp L, and of the relay R1.

The operation of the described system is as follows.

When the driver of the vehicle wishes to engage the power steering of the rear wheels 38, 39, he closes the selector S1; accordingly, since the selector S2 remains engaged so long as the speed remains below the preset limit (50 km/h), by means of the selector S3, assuming that the vehicle is in the straight-line travel position, the relay R2 is energized and closes the contact C2. Since the stem 58 is assumed to be inserted in the position for locking the rear steerable wheels, the selector S4 is closed and therefore the relay R1 is energized, causing the closure of the contact C1. In this manner, while the relay R1 remains self-engaged, the solenoid E is energized, actuating the movement of the electric valves 64, 76 into the position in which the jack 66 is connected to the discharge and the compressed air is sent to the jack 59, causing the disengagement of the stem 58 from the plates 54-56 and the release of the bar 49 from the axle 44.

The stem 58, by protruding axially on the opposite side of the cylinder 60 of the jack 59, acts on the distributor 77, which is moved into the position for closing the ducts 78, 79, so as to connect in a closed circuit the chambers 31, 32 of the jack 29 to the respective chambers 35, 36 of the jack 37.

Accordingly, when the towing unit T starts to lose alignment with respect to the semitrailer S (angle α), the pivot 20 of the beam 21 traces a circular path about the kingpin 14, causing an angular movement thereof with respect to the axis of the semitrailer S and therefore the rotation of the fork 25 about the axis of the pivot 26 (angle β). In this manner, the tang 24, by acting on the piston 28 of the jack 29, pushes the oil into the jack 37, causing the rear wheels 38 and 39 to steer in a direction that is concordant with, and proportionally concentric to, the misalignment of the axis of the towing unit with respect to the axis of the semitrailer. It should be noted that steering of the rear wheels remains active so long as the speed of the vehicle does not exceed the intended value (50 km/h). As soon as said speed is exceeded, assuming that the vehicle is traveling in a straight line, the selector S2 in fact opens and the solenoid E is de-energized, so that the electric valves 64, 76 connect the jack 59 to the discharge and connect the cylinder 66 to the compressed-air source, allowing the stem 58 to engage the hole 57 of the plate 54, but without engaging the holes of the underlying plates 55, 56. As soon as the jaws 71, 72 of the levers 67, 68 have restored the mutual alignment of the plates 54, 56, the stem enters the holes of the plates 55, 56, locking the wheels 38, 39 in centered position.

When the stem moves so as to engage in the holes 57 of the plates 54-56, the distributor 77 moves into the position for connecting the ducts 33, 34 to the duct 80, so that the oil that is expelled from the chambers 31, 32 during the steering of the towing unit T can flow back into the reservoir 81. It should be noted that when the vehicle moves along a curve with the rear wheels in steered configuration, the selector S3, which is actuated by the beam 21, moves into the position for energizing the relay R3, whereas the relay R2 is de-energized. The de-energization of R2 and the consequent opening of the contact C2 has no effect, since the solenoid E, the warning light L, and the relay R1 remain energized through C1. The energization of the relay R3 closes the contact C3 and thus allows to short-circuit the selector S2 throughout the period during which the vehicle travels along a curve. This prevents, if the selector S2 opens while traveling along a curve and when the intended speed is exceeded, the consequent centering and locking of the bar 49 in centered position from causing trajectory variations, with skidding in vehicle steering. The engagement and disengagement of the power steering of the rear wheels occur only and exclusively when the towing unit and the semitrailer are aligned and are traveling in a straight line.

It is evident that the invention perfectly achieves the intended aim and objects. The fact is particularly significant that the pneumatic system is used to lock the rear steerable wheels, so as to provide a considerable constructive simplification.

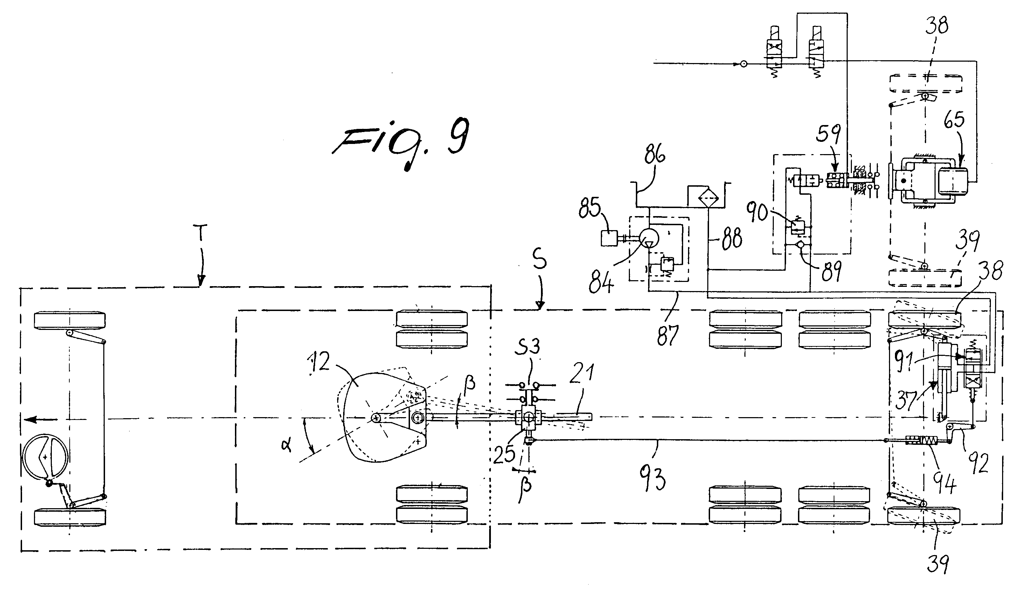

The embodiment shown in figure 9 shows a system in which actuation of the steerable rear wheels 38, 39 is not obtained by means of a hydrostatic circuit that transmits a torque supplied by the rotation of the towing unit T with respect to the semitrailer S, but by means of a hydraulic circuit of its own. For the sake of clarity, the rear wheels 38, 39, with the corresponding steering parallelogram 47-49, have been drawn a second time in dashed lines to show the application of the centering device 54-56; 65-72 and of the locking device 58-62.

The circuit for the actuation of the steerable rear wheels comprises a pump 84 that is actuated by the motor 85 and draws oil from a reservoir 86 and sends it, by means of a delivery duct 87, to the jack 37 for the orientation of the steerable rear wheels 38, 39. Between the delivery duct 87 and the return duct 88 that returns the oil to the reservoir 86, there is, in addition to the anticavitation valve 89 and the pressure-limiting valve 90, a distributor 91 of the two-way three-position type. The distributor 91 is mounted on the jack 37 and has a slide valve which is connected to the tang 24 of the sleeve 22 through a rocker-like transmission lever 92 and a flexible cable 93. A spring-loaded expander 94 is arranged along the traction element 93 and allows the actuation of the cable 93 even when the rocker-like lever 92 is blocked.

When the steerable rear wheels 38, 39 are released, the rotation of the towing unit T with respect to the semitrailer S causes, by means of the lever 92 and the cable 93, a movement of the slide valve of the distributor 91 on the side in which the supply of oil in the jack 37 causes a corresponding steering effect of the wheels 38, 39.

When the steerable rear wheels 38, 39 are centered and locked, the distributor 91 is in such a position as to connect the supply of the pump 84 to the tank 86.

As regards the rest, the functional methods of the system are within the scope of the previous description.

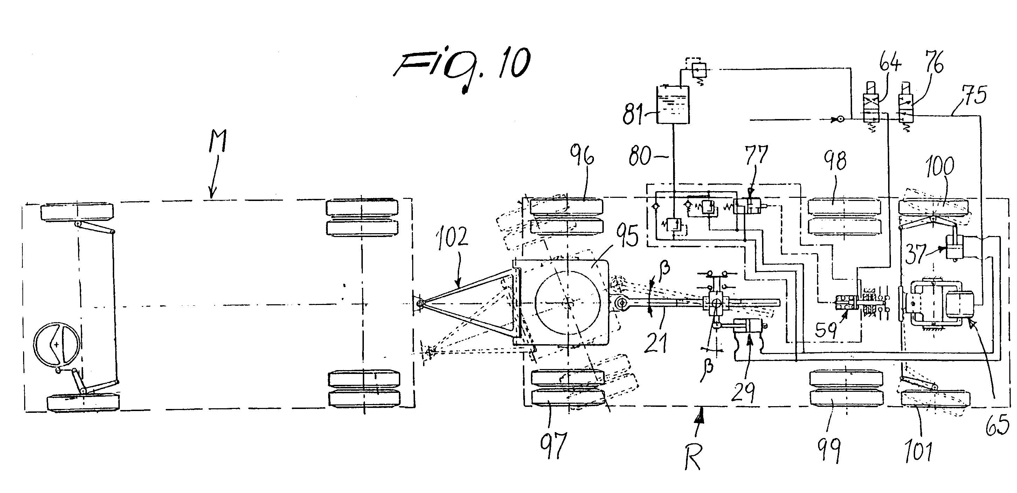

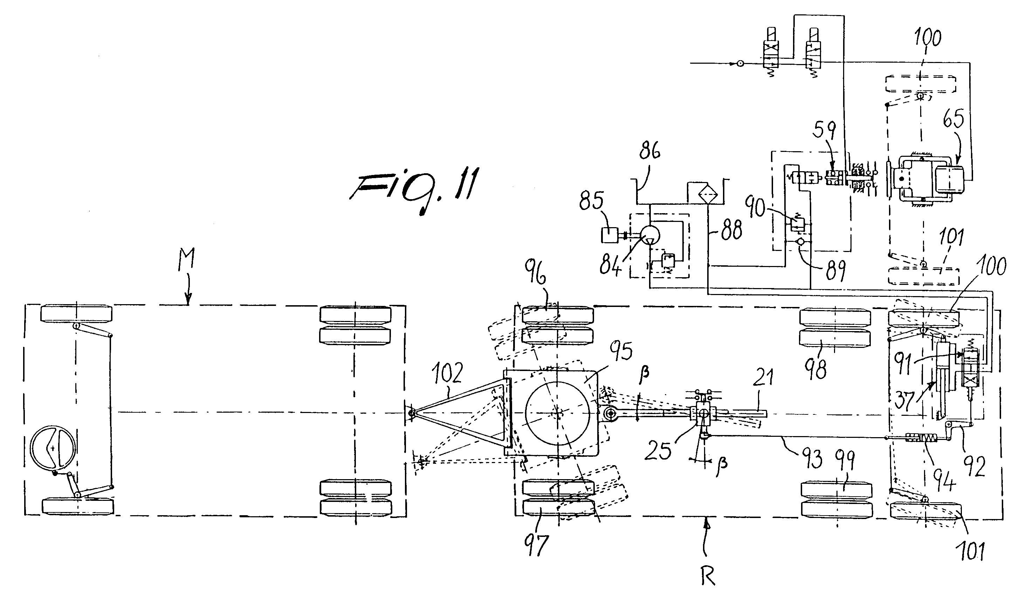

Finally, figures 10 and 11 illustrate two different embodiments that provide for the installation of the system on a trailer R that is towed by a tractor M. The trailer R, differently from the semitrailer S of the previous figures, comprises a loading platform that is pivoted at the front on a truck 95 that supports the steerable wheels 96, 97. The loading platform rests on the ground, at the rear, by means of non-steerable wheels 98, 99 and of steerable wheels 100, 101. The truck 95 is connected to a hook of the power chassis M by means of the drawbar 102.

The system for the steering of the steerable rear wheels 100, 101 is identical to the one of figure 8 and 9, and therefore the same components have been designated by the same reference numerals. It is evident that steering control is derived from the truck 95, instead of directly from the power chassis M; the beam 21 is connected articulately to the platform of said truck, which performs the same function as the towing unit T.

The steering system can also be applied when the vehicle has a plurality of steerable axles.

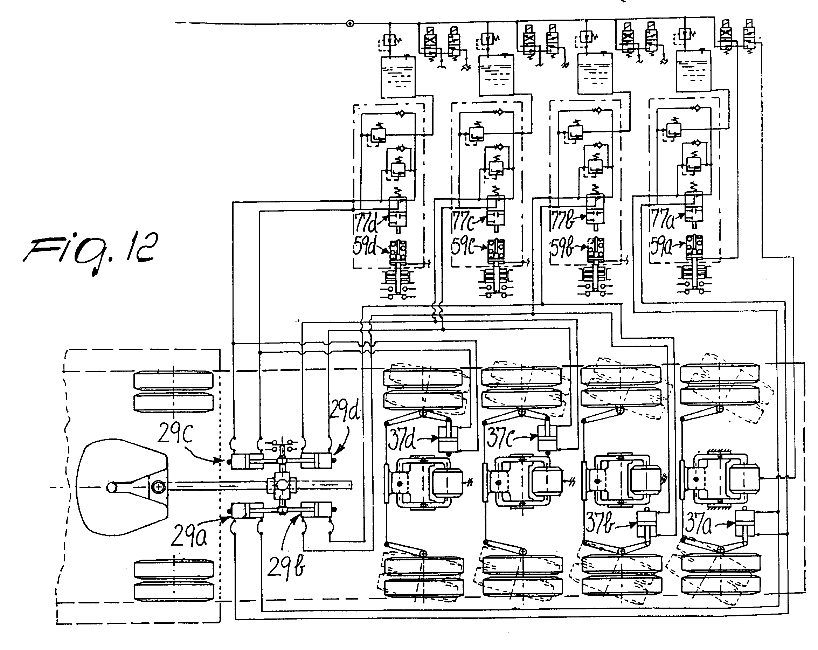

Figure 12 is a view of a solution on a vehicle provided with four steerable axles; an actuator 37a, 37b, 37c, 37d is associated with each one of said axles. Each actuator is actuated by a respective jack 29a, 29b, 29c, 29d by means of a respective distributor 77a, 77b, 77c, 77d that is controlled by the stem of a respective locking element 59a, 59b, 59c, 59d. Two jacks 29a, 29b are actuated by the tang 24 and the other two jacks 29c, 29d are actuated by the diametrically opposite tang. Conveniently, the actuators are sized so that the steering angle of the wheels gradually increases towards the rear of the vehicle.

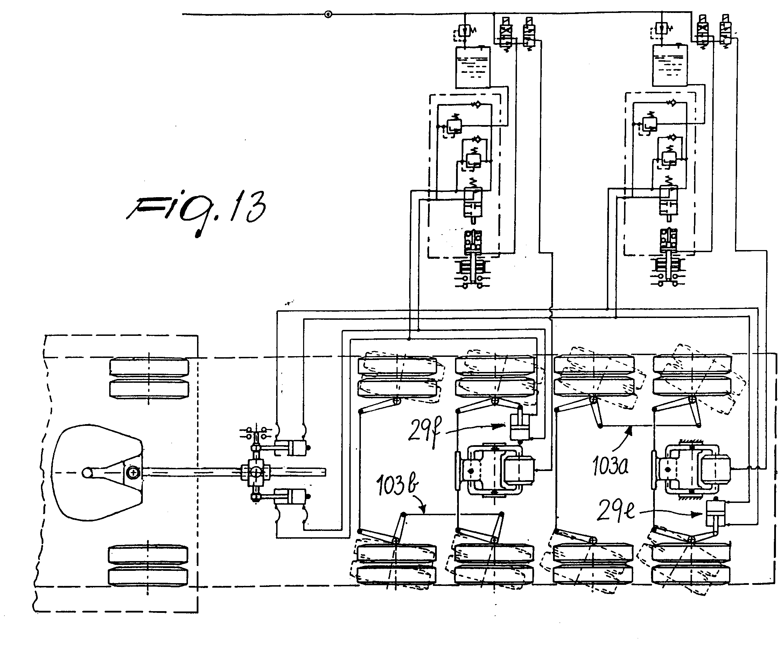

Figure 13 is a view of an embodiment with four steerable axles, but with only two actuators 29e and 29f. In this case, the steering movement is transmitted to the two other wheels that are not provided with actuators by means of two articulated parallelograms 103a and 103b.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. System for steering the steerable wheels of a rear axle of a vehicle, such as a semitrailer (S) or a trailer (R) towed by a pulling vehicle (T, M), comprising hydraulic means (37) acting on said steerable rear wheels (38, 39; 100, 101) and connectable to a source of hydraulic pressure (29, 84) so as to orientate said wheels in the steering direction and by the desired extent, and a pneumatic device (59,65) connectable to the source of compressed air that is mounted on said vehicle for the retention of said rear wheels (38, 39; 100, 101) in the centered position, which corresponds to the straight-line travel trajectory of the vehicle by voluntary control or when the vehicle must travel faster than a preset value, characterized in that said hydraulic means comprises a double action hydraulic actuator (37) and in that said pneumatic device comprises a centering device (65) for centering the rear wheels in said centered position and a locking device (59) for locking said rear wheels in said centered position upon which said locking device (59) is actuated, said double action hydraulic actuator (37) being connectable to said source of hydraulic pressure through a hydraulic distributor (77) sequentially controlled by said locking device (59) so that, when said locking device is in locking position of said rear wheels (38, 39, 100, 101), said double action hydraulic actuator (37) is ineffective.

2. System according to claim 1, characterized in that the steerable rear wheels (38, 39) can be orientated by an articulated steering parallelogram that is composed of a bar (49) that is parallel to the axle (44) and the ends of which are articulated to arms (47, 48) that are rigidly coupled to the rear wheels (38, 39), said double action hydraulic actuator (37) comprising a hydraulic jack that acts on the steering parallelogram of said rear wheels (38, 39), and wherein said pneumatic device comprises: a pneumatic expansion jack (66), at least one plate (54, 55) that is rigidly coupled to the axle (44), and a plate (56) that is rigidly coupled to the bar (49) of the articulated parallelogram, holes (57) being formed in said plates (54-56), said holes being aligned in the wheel centering position; said pneumatic expansion jack (66) and said locking device (59) being mounted on said axle (44), said pneumatic expansion jack (66) being connectable to said source of compressed air by means of electric valve means (76) and being adapted to act between two levers (67, 68) that are pivoted to the axle (44) and engage said plates (54-56) to retain them in the position for the alignment of the holes (57) when the wheels are in centered position; said locking device (59) being composed of a stem (58) that can move pneumatically in contrast with the action of a spring (62) that causes its insertion in said holes (57) in the wheel centering position; the pneumatic actuation of said stem (58) being adapted to cause the disengagement of said stem (58) from said holes (57) and the release of the steerable rear wheels (38, 39).

3. System according to any one or more of claims 1 and 2, characterized in that said double-action hydraulic actuator (37) is provided with a piston (51) that forms two chambers (35, 36) that are connected by a hydrostatic circuit to two respective chambers (31, 32) of a double-action hydraulic jack (29) that is actuated by means (21) that are adapted to detect the rotated position of the semitrailer (S) or trailer (R), with respect to the pulling vehicle (T, M); said circuit including said distributor (77) that is controlled by the stem (58) of said locking device (59), so that said circuit is connected to the discharge when said stem (58) is in the locking position, so as to make said double-action jack (29) inactive.

4. System according to any one or more of claims 1 and 2, characterized in that said hydraulic actuator (37) comprises a double-action hydraulic jack that is provided with a piston (51) that forms two chambers (35, 36) that are connectable through a second distributor (91) respectively to the outlet (87) and the return (88) of a pump (84) for supplying pressurized oil, said second distributor being a two-way three-position distributor (91) that is controlled by actuation means (92, 93) that are adapted to detect the rotated position of the semitrailer (S) or trailer (R) with respect to the pulling vehicle (T, M).

5. System according to claim 3, characterized in that it is for a rig composed of a towing unit (T) and a semitrailer (S), or a truck composed of a power chassis (M) and a trailer (R), an in that said means comprise: a rod-like element (21) that is articulately connected to the towing unit (T) or to the truck (95) of the trailer (R) and runs along the axis of the pulling vehicle, and a sleeve (25) that is guided on said rod-like element (21) and is provided with at least one perpendicular horizontal arm (24), said sleeve (25) being pivoted about a vertical axis in the platform (13) of the semitrailer (S) or trailer (R), said arm (24) being articulately connected to the stem (27) of said hydraulic jack (29), so that the rotation of the towing unit (T) or power chassis (M) with respect to the semitrailer (S) or trailer (R) causes an oscillation of the rod-like element (21) and of said arm (24) and the actuation of the hydraulic jack (29).

6. System according to claim 4, characterized in that it is for a rig composed of a towing unit (T) and a semitrailer (S), or for a truck composed of a power chassis (M) and a trailer (R), and in that said means comprise a rod-like element (21) that is articulately connected to the towing unit (T) or to the truck (95) of the trailer (R) and runs along the axis of the pulling vehicle, and a sleeve (25) that is guided on said rod-like element (21) and is provided with at least one perpendicular horizontal arm (24), said sleeve (25) being pivoted about a vertical axis in the platform (13) of the semitrailer (S) or trailer (R), said arm (24) being articulately connected to a cable (93) for the actuation of said second hydraulic distributor (91) so that the rotation of the towing unit (T) or power chassis (M) with respect to the semitrailer (S) or the trailer (R) causes an oscillation of the rod-like element (21) and of said arm (24) and the actuation of the second hydraulic distributor (91) by means of an actuation cable (93), along which an expander (94) is arranged.

7. System according to any one of claims 5 and 6, characterized in that said sleeve (25) has two diametrical tangs (23) that are articulately connected to the tines of a fork (25) that is provided with a vertical pivot (26) that is rotatably supported in the platform (13) of the semitrailer (S) or trailer (R), one (24) of said tangs extending through the respective tine so as to form said arm (24) that is connected to the stem (27) of said double-action hydraulic jack (29).

## Patentansprüche

1. System zum Lenken der lenkbaren Räder einer Hinterachse eines Fahrzeuges, wie beispielsweise eines Sattelaufliegers (S) oder eines Anhängers (R), der von einem Zugfahrzeug (T, M) geschleppt wird, mit hydraulischen Mitteln (37), die auf die lenkbaren Hinterräder (38, 39; 100, 101) wirken und mit einer hydraulischen Druckquelle (29, 84) verbunden werden können, um so die Räder mit dem gewünschten Einschlag in Lenkrichtung auszurichten, und einer Druckluftvorrichtung (59, 65), die an die Druckluftquelle angeschlossen werden kann, die am Fahrzeug zum Halten der Hinterräder (38, 39; 100, 101) in der Mittelstellung befestigt ist, die dem geradlinigen Fahrtverlauf des Fahrzeuges bei willkürlicher Steuerung oder wenn das Fahrzeug schneller als mit einem vorgegebenen Wert fahren muß, entspricht dadurch **gekennzeichnet**, daß die hydraulischen Mittel einen doppeltwirkenden hydraulischen Betätiger (37) haben, und daß die Druckluftvorrichtung eine Zentriervorrichtung (65) zum Zentrieren der Hinterräder in der Mittelstellung und eine Feststellvorrichtung (59) zum Feststellen der Hinterräder in der Mittelstellung hat, worauf die Feststellvorrichtung (59) betätigt wird, wobei der doppeltwirkende hydraulische Betätiger (37) mit der hydraulischen Druckquelle über einen sequentiell durch die Feststellvorrichtung (59) gesteuerten hydraulischen Verteiler (77) so verbunden werden kann, daß der doppeltwirkende hydraulische Betätiger (37) nicht wirksam ist, wenn die Feststellvorrichtung in Feststellposition der Hinterräder (38, 39; 100, 101) ist.

2. System nach Anspruch 1, dadurch **gekennzeichnet**, daß die lenkbaren Hinterräder (38, 39) durch ein Steuerparallelogrammgelenk ausgerichtet werden können, das aus einer Stange (49) besteht, die parallel zur Achse (44) ist und deren Enden an Arme (47, 48) angelenkt sind, die fest mit den Hinterrädern (38, 39) gekoppelt sind, wobei der doppeltwirkende hydraulische Betätiger (37) einen Hydraulikantrieb enthält, der auf das Steuerparallelogramm der Hinterräder (38, 39) wirkt, und daß die Druckluftvorrichtung einen Druckluftexpansionstrieb (66), mindestens eine Platte (54, 55), die fest mit der Achse (44) gekoppelt ist, und eine Platte (56), die fest mit der Stange (49) des Parallelogrammgelenks gekoppelt ist, sowie in den Platten (54 - 56) ausgebildete Löcher (57) hat, die in der Radmittelstellung aufeinander ausgerichtet sind; daß der Druckluftexpansionstrieb (66) und die Feststellvorrichtung (59) an der Achse (44) befestigt sind, daß der Druckluftexpansionstrieb (66) über eine Elektroventilvorrichtung (76) mit der Druckluftquelle verbunden werden kann und mischen zwei Heben (67, 68) wirken kann, die schwenkbar an der Achse (44) gelagert sind und mit den Platten (54 - 56) in Eingriff stehen, um sie in ihrer Stellung zum Ausrichten der Löcher (57) zu halten, wenn die Räder in Mittelstellung sind; daß die Feststellvorrichtung (59) einen Schaft (58) hat, der sich gegen eine Feder (62), die sein Einführen in die Löcher (57) in der Radmittelstellung verursacht, pneumatisch bewegen kann; und daß die pneumatische Betätigung des Schaftes (58) das Ausrücken des Schaftes (58) aus den Löchern (57) und die Freigabe der lenkbaren Hinterräder (38, 39) verursachen kann.

3. System nach einem oder mehreren der Ansprüche 1 und 2, dadurch **gekennzeichnet**, daß der doppeltwirkende hydraulische Betätiger (37) einen Kolben (51) hat, der zwei Kammern (35, 36) bildet, die durch einen hydrostatischen Kreislauf mit zwei entsprechenden Kammern (31, 32) eines doppeltwirkenden Hydraulikantrieb (29) verbunden sind, der durch Mittel (21) betätigt wird, die die gedrehte Stellung des Sattelaufliegers (S) oder Anhängers (R) relativ zum Zugfahrzeug (T, M) feststellen können; und daß der Kreislauf den Verteiler (77) enthält, der durch den Schaft (58) der Feststellvorrichtung (59) so gesteuert wird, daß der Kreislauf geöffnet ist, wenn der Schaft (58) in der Feststellposition ist, um so den doppeltwirkenden Antrieb (29) unwirksam zu machen.

4. System nach einem oder mehreren der Ansprüche 1 und 2, dadurch **gekennzeichnet**, daß der hydraulische Betätiger (37) einen doppeltwirkenden Hydraulikantrieb mit einem Kolben (51) enthält, der zwei Kammern (35, 36) bildet, die durch einen zweiten Verteiler (91) jeweils mit dem Auslaß (87) und dem Rücklauf (88) einer Pumpe (84) zum Zuführen von unter Druck gesetztem Öl verbunden werden können, und daß der zweite Verteiler ein Zweiwege-Dreistellungs-Verteiler (91) ist, der durch Betätigungsmittel (92, 93) gesteuert wird, die die gedrehte Stellung des Sattelaufliegers (S) oder Anhängers (R) relativ zum Zugfahrzeug (T, M) feststellen können.

5. System nach Anspruch 3, dadurch **gekennzeichnet**, daß es für einen Zug bestimmt ist, der aus einer Zugeinheit (T) und einem Sattelauflieger (S) besteht, oder für einen Lastzug, der aus einem Antriebsfahrzeug (M) und einem Anhänger (R) besteht, daß die Betätigungsmittel ein stangenförmiges Element (21), das gelenkig mit der Zugeinheit (T) oder dem Drehgestell (95) des Anhängers (R) verbunden ist und entlang der Achse des Zugfahrzeuges verläuft, und eine Hülse (25) enthalten, die auf dem stangenförmigen Element (21) geführt ist und mindestens einen horizontalen Querarm (24) hat, daß die Hülse (25) um eine vertikale Achse in der Ladefläche (13) des Sattelaufliegers (S) oder des Anhängers (R) geschwenkt wird, und daß der Arm (24) gelenkig mit dem Schaft (27) des Hydraulikantriebs (29) so verbunden ist, daß die Drehung der Zugeinheit (T) oder des Antriebsfahrzeugs (M) relativ zum Sattelauflieger (S) oder zum Anhänger (R) eine Schwingung des stangenförmigen Elementes (21) und des Arms (24) und die Betätigung des Hydraulikantriebs (29) verursacht.

6. System nach Anspruch 4, dadurch **gekennzeichnet**, daß es für einen Zug bestimmt ist, der aus einer Zugeinheit (T) und einem Sattelauflieger (S) besteht, oder für einen Lastzug, der aus einem Antriebsfahrzeug (M) und einem Anhänger (R) besteht, daß die Betätigungsmittel ein stangenförmiges Element (21), das gelenkig mit der Zugeinheit (T) oder dem Drehgestell (95) des Anhängers (R) verbunden ist und entlang der Achse des Zugfahrzeuges verläuft, und eine Hülse (25) enthalten, die auf dem stangenförmigen Element (21) geführt ist und mindestens einen horizontalen Querarm (24) hat, daß die Hülse (25) um eine vertikale Achse in der Ladefläche (13) des Sattelaufliegers (S) oder des Anhängers (R) geschwenkt wird, und daß der Arm (24) gelenkig mit einem Seilzug (93) zum Betätigen des zweiten hydraulischen Verteilers (91) so verbunden ist, daß die Drehung der Zugeinheit (T) oder des Antriebsfahrzeugs (M) relativ zum Sattelauflieger (S) oder zum Anhänger (R) eine Schwingung des stangenförmigen Elementes (21) und des Armes (24) und die Betätigung des zweiten hydraulischen Verteilers (91) mittels eines Betätigungsseilzuges (93) verursacht, in dessen Verlauf ein Expander (94) angeordnet ist.

7. System nach einem der Ansprüche 5 und 6, dadurch **gekennzeichnet**, daß die Hülse (25) zwei diametrale Zapfen (23) hat, die gelenkig mit den Armen einer Gabel (25) verbunden sind, die einen vertikalen Drehzapfen (26) hat. der drehbar in der Ladefläche (13) des Sattelaufliegers (S) oder des Anhängers (R) gelagert ist, und daß einer (24) der Zapfen durch seinen Arm hindurchragt, um so den Arm (24) zu bilden, der mit dem Schaft (27) des doppeltwirkenden Hydraulikantriebs (29) verbunden ist.

## Revendications

1. Système pour braquer les roues directrices d'un essieu arrière d'un véhicule, tel qu'une semi-remorque (S) ou une remorque (R) attelée à un véhicule tracteur (T,M) comprenant des moyens hydrauliques (37) agissant sur lesdites roues arrière directrices (38,39 ;100,101) et pouvant être reliés à une source de pression hydraulique (29,84) de façon à orienter lesdites roues dans la direction de braquage et d'une amplitude souhaitée, et un dispositif pneumatique (59,65) pouvant être relié à la source d'air comprimé qui est montée sur ledit véhicule pour le maintien desdites roues arrière (38,39 ; 100,101) dans la position centrée, qui correspond à la trajectoire de déplacement en ligne droite du véhicule par commande volontaire ou quand le véhicule doit se déplacer plus rapidement qu'une valeur préétablie,
caractérisé en ce que lesdits moyens hydrauliques comprennent un actionneur hydraulique à double effet (37) et en ce que ledit dispositif pneumatique comprend un dispositif de centrage (65) pour centrer les roues arrière dans ladite position centrée, et un dispositif de verrouillage (59) pour verrouiller lesdites roues arrière dans ladite position centrée dans laquelle ledit dispositif de verrouillage (59) est actionné, ledit actionneur hydraulique à double effet (37) pouvant être relié à ladite source de pression hydraulique par un distributeur hydraulique (77) commandé séquentiellement par ledit dispositif de verrouillage (59) de sorte que, quand ledit dispositif de verrouillage est dans la position de verrouillage desdites roues arrière (38,39 ; 100,101), ledit actionneur hydraulique à double effet (37) est inopérant.

2. Système selon la revendication 1,
caractérisé en ce que les roues arrière directrices (38,39) peuvent être orientées par un parallélogramme de braquage articulé qui est composé d'une barre (49) qui est parallèle à l'essieu (44) et dont les extrémités sont articulées à des bras (47,48) qui sont rigidement couplés aux roues arrière (38,39), ledit actionneur hydraulique à double effet (37) comprenant un vérin hydraulique qui agit sur le parallélogramme de braquage desdites roues arrière (38,39), et dans lequel ledit dispositif pneumatique comprend : un vérin d'expansion pneumatique (66), au moins une plaque (54,55) qui est rigidement couplée à l'essieu (44), et une plaque (56) qui est rigidement couplée à la barre (49) du parallélogramme articulé, des trous (57) étant formés dans lesdites plaques (54-56), lesdits trous étant alignés dans la position de centrage des roues ; ledit vérin d'expansion pneumatique (66) et ledit dispositif de verrouillage (59) étant montés sur ledit essieu (44), ledit vérin d'expansion pneumatique (66) pouvant être relié à ladite source d'air comprimé par l'intermédiaire de moyens de valve électrique (76) et étant adapté pour agir entre deux leviers (67,68) qui sont pivotants sur l'essieu (44) et engagent lesdites plaques (54-56) pour les maintenir dans la position d'alignement des trous (57) quand les roues sont dans la position centrée ; ledit dispositif de verrouillage (59) étant composé d'une tige (58) qui peut se déplacer pneumatiquement en opposition à l'action d'un ressort (62) qui entraîne son insertion dans lesdits trous (57) dans la position de centrage des roues ; l'actionnement pneumatique de ladite tige (58) étant adapté pour entraîner le désengagement de ladite tige (58) desdits trous (57) et la libération des roues arrière directrices (38,39).

3. Système selon l'une quelconque ou plusieurs des revendications 1 et 2,
caractérisé en ce que ledit actionneur hydraulique à double effet (37) est muni d'un piston (51) qui forme deux chambres (35,36) qui sont reliées par un circuit hydrostatique à deux chambres respectives (31,32) d'un vérin hydraulique à double effet (29) qui est actionné par des moyens (21) qui sont adaptés pour détecter la position tournée de la semi-remorque (S) ou de la remorque (R), par rapport au véhicule tracteur (T,M) ; ledit circuit incluant ledit distributeur (77) qui est commandé par la tige (58) dudit dispositif de verrouillage (59), de sorte que ledit circuit est relié au refoulement quand ladite tige (58) est dans la position de verrouillage, de façon à rendre inactif ledit vérin à double effet (29).

4. Système selon l'une quelconque ou plusieurs des revendications 1 et 2,
caractérisé en ce que ledit actionneur hydraulique (37) comprend un vérin hydraulique à double effet qui est muni d'un piston (51) qui forme deux chambres (35,36) qui peuvent être reliées par un second distributeur (91) respectivement à la sortie (87) et au retour (88) d'une pompe (84) pour fournir de l'huile sous pression, ledit second distributeur étant un distributeur deux voies-trois positions (91) qui est commandé par des moyens d'actionnement (92,93) qui sont adaptés pour détecter la position tournée de la semi-remorque (S) ou de la remorque (R) par rapport au véhicule tracteur (T,M).

5. Système selon la revendication 3,
caractérisé en ce qu'il est destiné à un équipage composé d'une unité d'attelage (T) et d'une semi-remorque (S), ou d'un camion composé d'un châssis de puissance (M) et d'une remorque (R), et en ce que lesdits moyens comprennent : un élément en forme de tige (21) qui est relié de façon articulée à l'unité d'attelage (T) ou su camion (95) de la remorque (R) et s'étend le long de l'axe du véhicule tracteur, et un manchon (25) qui est guidé sur ledit élément en forme de tige (21) et est muni d'au moins un bras horizontal perpendiculaire (24), ledit manchon (25) étant pivotant autour d'un axe vertical dans la plate-forme (13) de la semi-remorque (S) ou de la remorque (R), ledit bras (24) étant relié de façon articulée à la tige (27) dudit vérin hydraulique (29), de sorte que la rotation de l'unité d'attelage (T) ou du châssis de puissance (M) par rapport à la semi-remorque (S) ou à la remorque (R) provoque une oscillation de l'élément en forme de tige (21) et dudit bras (24), et l'actionnement du vérin hydraulique (29).

6. Système selon la revendication 4,
caractérisé en ce qu'il est destiné à un équipage constitué d'une unité d'attelage (T) et d'une semi-remorque (S), ou d'un camion composé d'un châssis de puissance (M) et d'une remorque (R), et en ce que lesdits moyens comprennent un élément en forme de tige (21) qui est relié de façon articulée à l'unité d'attelage (T) ou au camion (95) de la remorque (R) et s'étend le long de l'axe du véhicule tracteur, et un manchon (25) qui est guidé sur ledit élément en forme de tige (21) et est muni d'au moins un bras horizontal perpendiculaire (24), ledit manchon (25) étant pivotant autour d'un axe vertical dans la plate-forme (13) de la semi-remorque (S) ou de la remorque (R), ledit bras (24) étant relié de façon articulée à un câble (93) pour l'actionnement dudit second distributeur hydraulique (91), de sorte que la rotation de l'unité d'attelage (T) ou du châssis de puissance (M) par rapport à la semi-remorque (S) ou à la remorque (R) entraîne une oscillation de l'élément en forme de tige (21) et dudit bras (24), et l'actionnement du second distributeur hydraulique (91) par l'intermédiaire d'un câble d'actionnement (93) le long duquel un mécanisme d'expansion (94) est agencé.

7. Système selon l'une quelconque des revendications 5 et 6,
caractérisé en ce que ledit manchon (25) présente deux pièces diamétrales (23) qui sont reliées de façon articulée aux branches d'une chape (25) qui est munie d'un pivot vertical (26) qui est supporté de façon rotative dans la plate-forme (13) de la semi-remorque (S) ou de la remorque (R), l'une (24) desdites pièces s'étendant à travers la branche respective de façon à former ledit bras (24) qui est relié à la tige (27) dudit vérin hydraulique à double effet (29).
